# EUROPÄISCHE PATENTSCHRIFT

(11) **EP 1 430 232 B1**
(45) Veröffentlichungstag und Bekanntmachung des Hinweises auf die Patenterteilung: **23.03.2005**
(21) Anmeldenummer: 02798729.6
(22) Anmeldetag: 17.09.2002
(51) Int. Cl.: F16D 55/2265

(54) **SCHEIBENBREMSE, INSBESONDERE FÜR EIN NUTZFAHRZEUG**
DISC BRAKE, IN PARTICULAR FOR A UTILITY VEHICLE
FREIN A DISQUE DESTINE NOTAMMENT A UN VEHICULE UTILITAIRE

(30) Priorität: 18.09.2001 DE 10145908
(43) Veröffentlichungstag der Anmeldung: 23.06.2004
(73) Patentinhaber: KNORR-BREMSE SYSTEME FÜR NUTZFAHRZEUGE GMBH, 80809 München (DE)
(72) Erfinder: MACKE, Wlodzimierz, 82140 Olching (DE); IRASCHKO, Johann, D-85301 Schweitenkirchen (DE)
(86) Internationale Anmeldenummer: PCT/EP2002/010418
(87) Internationale Veröffentlichungsnummer: WO 2003/025413

(56) Entgegenhaltungen:
- GB-A- 1 106 237
- US-A- 4 290 505
- PATENT ABSTRACTS OF JAPAN vol. 004, no. 096 (M-020), 11. Juli 1980 (1980-07-11) -& JP 55 054732 A (HOSEI BRAKE KOGYO KK), 22. April 1980 (1980-04-22)
- PATENT ABSTRACTS OF JAPAN vol. 007, no. 153 (M-226), 5. Juli 1983 (1983-07-05) -& JP 58 061340 A (NISSAN JIDOSHA KK), 12. April 1983 (1983-04-12)

## Beschreibung

Die vorliegende Erfindung betrifft eine Scheibenbremse, insbesondere für ein Nutzfahrzeug gemäß dem Oberbegriff des Anspruchs 1.

Bei derartigen Scheibenbremsen wird der Bremssattel durch Befestigungselemente mit dem Bremsträger, der an das Fahrzeug angeschlossen ist, verbunden. Dabei greifen Lagerbolzen in den Bremsträger ein, die andererseits in Gleitlagern des Bremssattels so geführt sind, daß eine axiale Verschiebung des Bremssattels zum ortsfesten Bremsträger möglich ist. Von den Gleitlagern ist eines als Festlager mit geringem Gleitspiel ausgebildet, während das andere als Loslager fungiert, wodurch insbesondere Fertigungstoleranzen ausgeglichen werden.

Um einen solchen Ausgleich zu erreichen, ist es bekannt, den Lagerbolzen des Loslagers in einer Gummibuchse zu führen, demgegenüber der Lagerbolzen des Festlagers in einer Messingbuchse gelagert ist.

Wenngleich durch die Elastizität der Gummibuchse ein entsprechender Toleranzausgleich quer zur Achsrichtung möglich ist, stellt sich diese Lösung insofern als nachteilig dar, als konstruktionsbedingt die Gummibuchse nicht ausreichend gekapselt werden kann, so daß sie im Betrieb einer Verschmutzung ausgesetzt ist. Diese kann die Lebensdauer der Gummibuchse herabsetzen, so daß mehr oder weniger häufig Reparaturen fällig werden. Gerade für den Einsatz im Bereich von Nutzfahrzeugen stellt eine Betriebsunterbrechung einen erheblichen Kostenfaktor dar.

Eine weitere Lösung nach dem Stand der Technik sieht vor, daß das Loslager ebenso wie das Festlager Gleitbuchsen beispielsweise aus Messing aufweist, wobei die Gleitbuchse des Loslagers ein übergroßes Spiel gegenüber dem eingeführten Lagerbolzen aufweist. Dabei erstreckt sich dieses Spiel über den gesamten Umfang, wodurch sich eine relativ hohe Geräuschbildung sowie eine erhöhte Lagerbelastung ergibt, die naturgemäß ebenfalls zu einem vorzeitigen Verschleiß fährt.

Um diese Nachteile auszuschließen, ist es weiter bekannt, die Gleitbuchse des Loslagers in eine ovale Bohrung des Bremssattels einzupressen, wobei sich das beidseitige Spiel zur Gleitbuchse in der Ebene erstreckt, in der das Festlager plaziert ist. Senkrecht dazu ist ebenso wie beim Festlager insgesamt kein oder nur ein sehr geringes Spiel vorgesehen.

Aus der JP 55 054 732 ist eine Scheibenbremse gemäss dem Gattungsbegriff bekannt.

Allerdings ist das Einbringen der ovalen Bohrung in den Bremssattel nur durch eine kostenintensive aufwendige Bearbeitung möglich.

Der Erfindung liegt daher die Aufgabe zugrunde, eine Scheibenbremse der gattungsgemäßen Art so weiter zu entwickeln, daß eine kostengünstige Herstellung und Montage der Befestigungselemente möglich ist und deren Standzeit verbessert wird.

Diese Aufgabe wird durch eine Scheibenbremse gelöst, die die Merkmale des Anspruchs 1 oder des Anspruchs 2 aufweist.

Durch die Erfindung kann nun einerseits auf eine aufwendige Bearbeitung des Bremssattels verzichtet werden, da lediglich eine runde Bohrung zur Aufnahme der Gleitbuchse eingebracht werden muß. Andererseits ist das Loslager, insbesondere die Gleitbuchse, so vor Verschmutzungen geschützt, daß eine übermäßige, dadurch bedingte Beanspruchung praktisch ausgeschlossen ist. Des weiteren wird die zum Stand der Technik geschilderte Geräuschbildung minimiert, da das größere Spiel nur in der tatsächlich gewünschten Richtung vorgesehen werden kann.

Im Vergleich zu der genannten Gummibuchse, wie sie bislang eingesetzt wurde, ergibt sich eine geringere notwendige Verschiebekraft des Bremssattels, da der Lagerbolzen nicht vollumfänglich umschlossen wird, wodurch die Reibungskräfte minimiert sind.

Weiter wird durch die Erfindung eine genaue Führung des Lagerbolzens in der Richtung erreicht, die senkrecht zur Ebene des Toleranzausgleichs liegt, d.h. senkrecht zur Längserstreckung der prinzipiell im Querschnitt ovalen Innenbohrung der Gleitbuchse bzw. des im Querschnitt ovalen Lagerbolzens. Bei Verwendung der Gleitbuchse mit den Merkmalen des Anspruchs 1 weist der darin geführte Lagerbolzen vorzugsweise einen runden Querschnitt auf. Grundsätzlich ist aber auch eine andere Querschnittsform denkbar. Wesentlich ist, daß der Lagerbolzen innerhalb des Spiels radial bewegbar ist, wobei die Innenbohrung der Gleitbuchse im Querschnitt langlochförmig ausgebildet sein kann. In diesem Fall werden die halbkreisförmigen Enden durch Geraden miteinander verbunden.

Eine Gleitbuchse entsprechend dem Merkmal des Anspruchs 1 ist in einfacher Art und Weise herstellbar. So kann die Gleitbuchse, die durch die unterschiedlichen Wandstärken ein ovales Innenloch aufweist, während die Außenkontur kreisförmig ist, aus einem profilierten, bandförmigen Rohling geformt sein, dessen eine Seite glattflächig ist und die äußere Mantelfläche der Gleitbuchse bildet, während die andere Seite des Rohlings wellenförmig ist, wobei der jeweilige Wellenberg der dickeren und das jeweilige Wellental der dünneren Wandstärke entspricht.

Der Rohling, der aus einem Bandmaterial abgelängt sein kann, wird zu einer Gleitbuchse gerollt, was ohne großen Fertigungsaufwand möglich ist. Dabei entspricht die Länge des Rohlings etwa dem Umfang der Gleitbuchse und die Breite etwa deren Länge.

Als Werkstoff des profilierten Bandes kann Stahl, beschichteter Stahl, z.B. mit Gleitmaterial,, Bronze, Messing, Kunststoff, Verbundmaterial oder ein geeigneter anderer Werkstoff eingesetzt werden. Insoweit können entsprechende Anforderungen an den Werkstoff problemlos berücksichtigt werden.

Die genannte Wellenprofilierung des Bandes kann sich in Längsrichtung erstrecken, wobei die Breite des Bandes dem Umfang der Gleitbuchse entspricht.

Denkbar ist aber auch, den Wellenverlauf quer zur Längserstreckung des Bandes vorzusehen. Dann entspricht die Breite des Bandes der Länge der Gleitbuchse, während das abzulängende Maß gleich dem Umfang der Gleitbuchse ist.

Bemerkenswert ist, daß die Fertigungskosten einer in diesem Sinne hergestellten Gleitbuchse nicht größer sind als der einer herkömmlichen Gleitbuchse, die im Querschnitt einen kreisrunden Ring bildet.

Selbstverständlich können die Rohlinge für die Herstellung der Gleitbuchsen auch einzeln profiliert werden. Jedoch bietet die geschilderte Herstellung aus einem profilierten Band erhebliche Vorteile, insbesondere unter dem Gesichtspunkt, daß solche Scheibenbremsen und mithin Gleitbuchsen in großen Stückzahlen zum Einsatz kommen.

Um eine lagegenaue Montage der Gleitbuchse des Loslagers zu ermöglichen, die für eine einwandfreie Funktion unabdingbar ist, kann die Gleitbuchse mit einer Markierung, beispielsweise einer Einkerbung versehen sein, die in Korrespondenz mit einer Markierung am Bremssattel den lagegenauen Einbau der Gleitbuchse erleichtert.

Bei einer Scheibenbremse gemäß dem Anspruch 2 wird hinsichtlich des Toleranzausgleichs der gleiche Effekt erzielt wie bei der Scheibenbremse nach Anspruch 1. Dabei wird in eine runde Bohrung des Bremssattels eine im Querschnitt runde Gleitbuchse mit gleicher Wandstärke eingepreßt, in der der im Querschnitt ovale Lagerbolzen geführt ist. Das kleinste Querschnittsabmaß des Lagerbolzens erstreckt sich dabei in der Ebene des Toleranzausgleichs, d. h., in der Ebene, in der das Festlager angeordnet ist. Das größte Querschnittsabmaß hingegen entspricht etwa dem lichten Durchmesser der Gleitbuchse.

Weitere vorteilhafte Ausbildungen sind in den Unteransprüchen gekennzeichnet.

Ausführungsbeispiele der Erfindung gemäß Anspruch 1 wird nachfolgend anhand der beigefügten Zeichnungen beschrieben.

Es zeigen:
- Figur 1: einen Teillängsschnitt durch eine erfindungsgemäße Scheibenbremse,
- Figur 2: eine Einzelheit der Scheibenbremse gesehen in Richtung II-II in Figur 1,
- Fig. 3 und 4: jeweils ein Profilband zur Herstellung einer erfindungsgemäßen Gleitbuchse jeweils in einer perspektivischen Darstellung,
- Figur 5: ein weiteres Ausführungsbeispiel der Gleitbuchse in einer Vorderansicht.

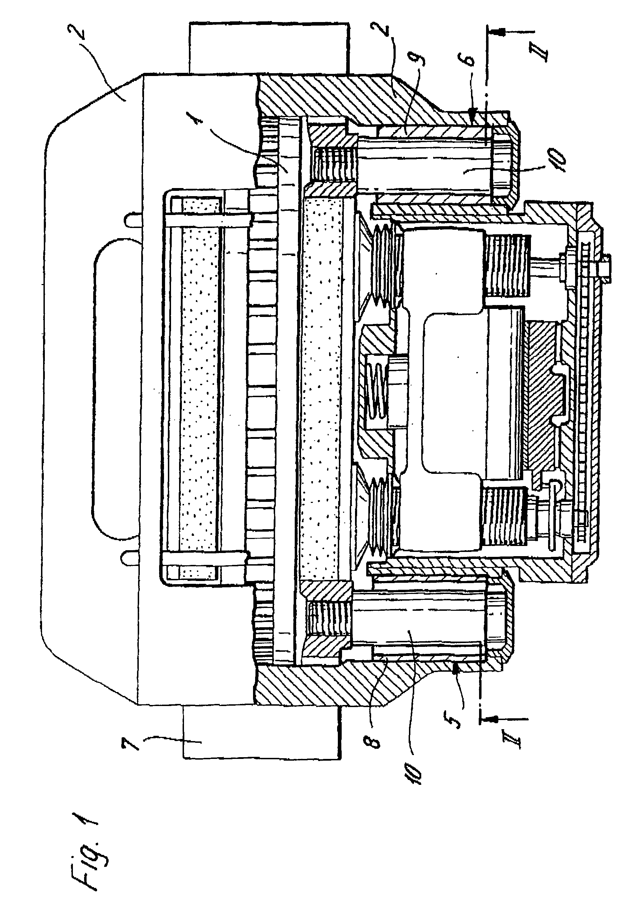

In der Figur 1 ist eine Scheibenbremse, insbesondere für ein Nutzfahrzeug dargestellt, die in ihrem Grundaufbau einen Bremssattel 2 aufweist, der eine innenbelüftete Bremsscheibe 1 umfaßt, die an einer nicht dargestellten Achse des Nutzfahrzeuges befestigt ist.

Der Bremssattel 2 ist an einem Bremsträger 7 des Nutzfahrzeuges, bezogen auf die Bremsscheibe 1, axial verschiebbar befestigt.

Hierzu sind zwei Befestigungselemente 5, 6 vorgesehen, von denen das Befestigungselement 5 als Loslager und das Befestigungselement 6 als Festlager ausgebildet ist.

Beide Befestigungselemente 5, 6 weisen jeweils eine Gleitbuchse 8, 9 sowie einen darin geführte Lagerbolzen 10 auf, wobei die außenumfänglich runden Gleitbuchsen 8, 9 in runde Bohrungen des Bremssattels 2 eingepreßt sind.

Die Lagerbolzen 10 sind in den Bremsträger 7 eingeschraubt und somit gegenüber dem Bremssattel 2 ortsfest, während die Gleitbuchsen 8, 9 fest mit dem Bremssattel 2 verbunden sind und von daher auf dem Lagerbolzen 10 zusammen mit dem Bremssattel 2 axial verschiebbar gelagert sind.

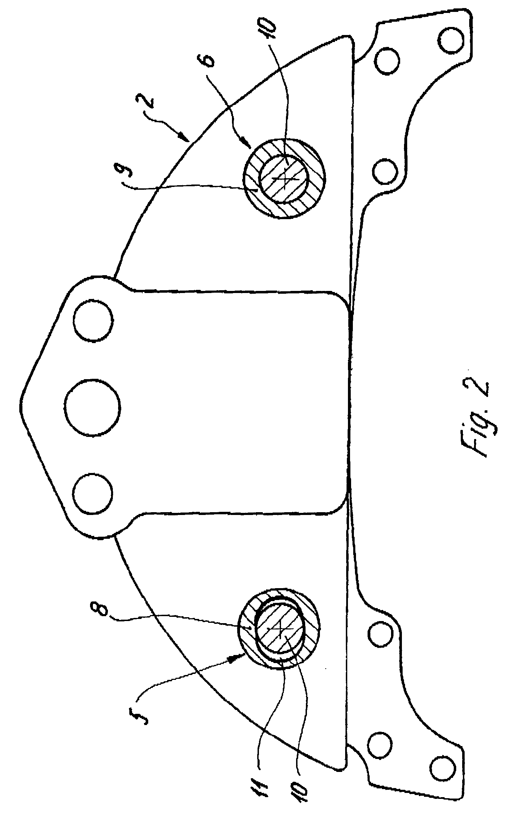

Wie insbesondere die Figur 2 sehr deutlich zeigt, weist die Gleitbuchse 8 des Loslagers 5 partiell unterschiedliche Wandstärken auf, wobei der Querschnitt der Gleitbuchse 8 so ausgebildet ist, daß sich eine spiegelsymmetrische Form mit der Ausbildung einer langlochförmigen Ovalbohrung 11 ergibt, wobei sich deren größte Weite in der Ebene erstreckt, auf der das Festlager 6 liegt. Das kleinste Abmaß, das senkrecht zum größten Abmaß der Ovalbohrung 11 vorliegt, entspricht etwa dem zugeordneten Durchmesser des runden Lagerbolzens 10. Somit ergibt sich ein seitliches Spiel des Lagerbolzens 10 zur Ovalbohrung 11, das der Differenz zwischen deren größter Erstreckung und dem Durchmesser des zylindrischen Lagerbolzens 10 entspricht.

Demgegenüber ist die Gleitbuchse 9 als zylindrischer Hohlkörper ausgebildet, in dem der zylindrische Lagerbolzen 10 mit so geringem Spiel geführt ist, daß eine einwandfreie axiale Verschiebung der Gleitbuchse 9 und damit des Bremssattels 2 möglich ist.

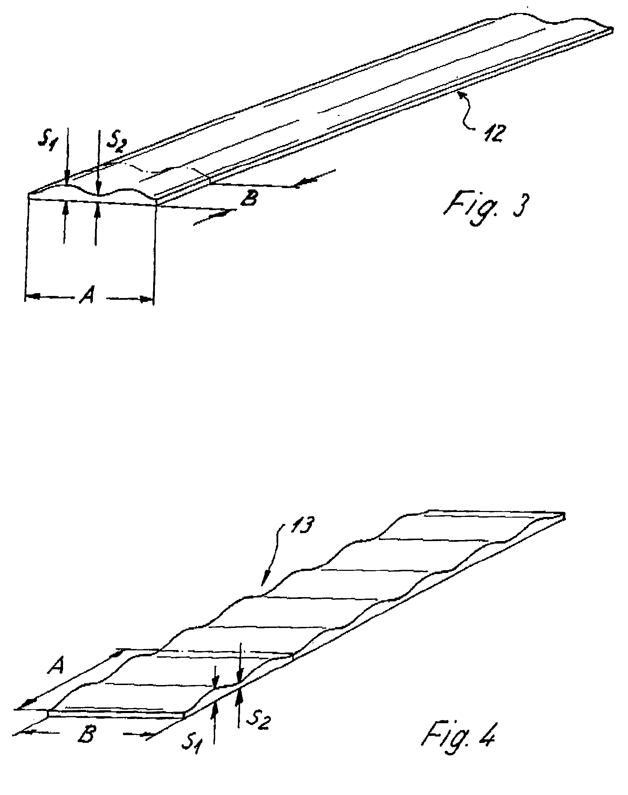

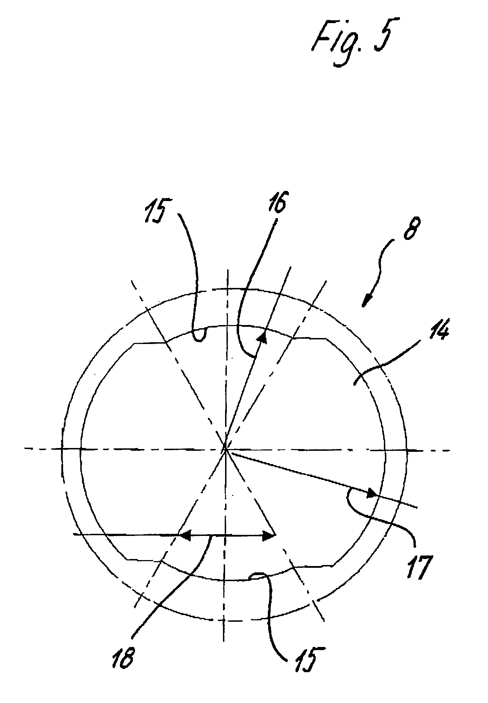

In den Figuren 3 und 4 sind jeweils Rohformen zur Herstellung der Gleitbuchse 8 des Loslagers 5 dargestellt.

Dabei ist bei dem in der Figur 3 gezeigten Beispiel ein Profilband 12 zu erkennen, das als Wellprofil mit sich in Längsrichtung des Profilbandes 12 erstreckenden gewellten Profilierungen versehen ist. Deren Breite A entspricht dem Umfang der Gleitbuchse 8, während das Abmaß B, mit dem die Rohmaterialien für mehrere Gleitbuchsen 8 abgelängt werden; der Länge der fertigen Gleitbuchse 8 entspricht.

Die Wellenprofilierung besteht aus zwei Wellenbergen, deren Höhe die größte Wandstärke S 1 der Gleitbuchse 8 definieren, und sich daran anschließenden Wellentälern mit der geringeren Wandstärke S2.

Nach einem Ablängen, entsprechend dem Maß B, wird die Gleitbuchse durch Rollen in ihre endgültige Form gebracht, in der sie eine zylindrische Mantelfläche aufweist.

In diesem Sinne werden auch Abschnitte zu der Gleitbuchse 8 geformt, wie sie von einem Profilband 13 gemäß der Figur 4 abgetrennt werden. Hier allerdings verlaufen die Profilierungen quer zur Längserstreckung des Profilbandes 13, so daß sich die Abtrennlänge A durch den Außenumfang der Gleitbuchse 8 definiert, während die Breite B des Profilbandes der Länge der Gleitbuchse 8 entspricht.

Vorzugsweise werden die Gleitbuchsen 8 jedoch aus einem Profilband 12 hergestellt, da dieses Profilband einfacher zu fertigen ist als das Profilband 13 nach der Figur 4.

In der Figur 5 ist ein weiteres Ausführungsbeispiel einer Gleitbuchse 8 gemäß dem Anspruch 1 dargestellt.

Dabei ist eine Führungsbohrung 14, in der der Lagerbolzen 10 geführt ist, langlochförmig ausgebildet, mit der Besonderheit, daß an den beiden, die Längsseiten bildenden Seitenwänden jeweils eine kreisbogenförmige Ausnehmung 15 vorgesehen ist, die mantelseitig den Lagerbolzen 10 innerhalb eines Umschlingungswinkels 18 überdecken.

Der Radius 16 der sich diametral gegenüberliegenden Ausnehmungen 15 entspricht etwa dem Radius des Lagerbolzens 10, während die kreisbogenförmigen Stirnseiten der Führungsbohrung 14 konzentrisch zum Außenumfang der Gleitbuchse verlaufen, wobei die lichte Breite der Führungsbohrung 14 kleiner ist als der zweifache Radius 17 der Stirnseiten.

Diese Ausführungsvariante bietet den Vorteil, daß, da der Lagerbolzen 10 innerhalb des Umschlingungswinkels 18 an den Ausnehmungen 15 anliegt, eine relativ geringe Flächenpressung wirksam wird, gleichzeitig jedoch aufgrund des geringen Umschlingungswinkels ausreichend seitlicher Spielraum vorhanden ist, um einen Toleranzausgleich zu ermöglichen.

## Patentansprüche

1. Scheibenbremse, insbesondere für ein Nutzfahrzeug, mit einem eine Bremsscheibe (1) umfassenden Bremssattel (2), der an einem Bremsträger (7) des Nutzfahrzeuges mittels zweier Befestigungselemente, bezogen auf die Bremsscheibe (1), axial verschiebbar befestigt ist, wobei ein Befestigungselement als Festlager (6) und das andere als Loslager (5) ausgebildet ist, **dadurch gekennzeichnet, daß** das Loslager (5) aus einer Gleitbuchse (8) mit partiell unterschiedlichen Wandstärken (S1, S2) und einem darin geführten, relativ zur Gleitbuchse (8) radial bewegbaren, im Querschnitt vorzugsweise runden Lagerbolzen (10) besteht.

2. Scheibenbremse nach dem Oberbegriff des Anspruchs 1, **dadurch gekennzeichnet, daß** das Loslager (5) aus einer Gleitbuchse mit gleichmäßiger Wandstärke und einem darin geführten, relativ zur Gleitbuchse (8) radial bewegbaren, im Querschnitt ovalen Lagerbolzen besteht.

3. Scheibenbremse nach Anspruch 1, **dadurch gekennzeichnet, daß** das kleinste lichte Querschnittsabmaß der Gleitbuchse (8) etwa dem Durchmesser des Lagerbolzens (10) entspricht.

4. Scheibenbremse nach Anspruch 2, **dadurch gekennzeichnet, daß** das größte Querschnittsabmaß des Lagerbolzens etwa dem lichten Durchmesser der Gleitbuchse entspricht.

5. Scheibenbremse nach Anspruch 1, **dadurch gekennzeichnet, daß** das Loch der Gleitbuchse (8) als Ovalbohrung (11) ausgebildet ist.

6. Scheibenbremse nach Anspruch 5, **dadurch gekennzeichnet, daß** die Ovalbohrung (11) spiegelsymmetrisch ist.

7. Scheibenbremse nach Anspruch 5, **dadurch gekennzeichnet, daß** die Ovalbohrung (11) langlochförmig ausgebildet ist.

8. Scheibenbremse nach einem oder mehreren der Ansprüche 1-7, **dadurch gekennzeichnet, daß** die Achse der größten Längenerstreckung der Ovalbohrung (11) der Gleitbuchse (8) bzw. die kleinste Querschnittserstreckung des im Querschnitt ovalen Lagerbolzens auf der mit dem Festlager (6) gemeinsamen Ebene liegt.

9. Scheibenbremse nach Anspruch 1, **dadurch gekennzeichnet, daß** das Gleitlager (8) aus einem Abschnitt eines Profilbandes (12, 13) gebildet ist.

10. Scheibenbremse nach Anspruch 9, **dadurch gekennzeichnet, daß** ein Abschnitt des Profilbandes (12, 13) so gerollt ist, daß die Gleitbuchse (8) eine zylindrische Mantelfläche aufweist.

11. Scheibenbremse nach Anspruch 9, **dadurch gekennzeichnet, daß** das Profilband (12) zwei sich in Längsrichtung erstreckende wellenförmige Profilierungen aufweist, wobei die Höhe (S1) der Wellenberge der größten Wandstärke der Gleitbuchse (8) und die Höhe (S2) der sich an die Wellenberge anschließenden Wellentäler der geringsten Wanddicke der Gleitbuchse (8) entsprechen.

12. Scheibenbremse nach einem der Ansprüche 9-11, **dadurch gekennzeichnet, daß** die Breite des Profilbandes etwa dem Umfang der Gleitbuchse (8) entspricht.

13. Scheibenbremse nach Anspruch 9, **dadurch gekennzeichnet, daß** das Profilband (13) eine Vielzahl von parallel und mit Abstand zueinander verlaufende, wellenförmige Profilierungen aufweist.

14. Scheibenbremse nach Anspruch 13, **dadurch gekennzeichnet, daß** die Höhe (S1) der Wellenberge der größten Wanddicke der Gleitbuchse (8) und die Höhe (S2) der Wellentäler der kleinsten Wanddicke entsprechen.

15. Scheibenbremse nach Anspruch 13, **dadurch gekennzeichnet, daß** die Breite (B) des Profilbandes (13) der Länge der Gleitbuchse (8) entspricht.

16. Scheibenbremse nach Anspruch 13, **dadurch gekennzeichnet, daß** jeder Abschnitt zur Bildung der Gleitbuchse (8) zwei Wellenberge und zwei Wellentäler aufweist.

17. Scheibenbremse nach Anspruch 1 oder 2, **dadurch gekennzeichnet, daß** die Gleitbuchse 8 bzw. der Lagerbolzen eine Markierung aufweist, die mit einer Markierung des Bremssattels (2) korrespondiert.

18. Scheibenbremse nach Anspruch 9, **dadurch gekennzeichnet, daß** das Profilband (12, 13) aus mit einer Gleitbeschichtung versehenem Stahl, Bronze, Messing, Kunststoff oder einem Verbundmaterial besteht.

19. Scheibenbremse nach Anspruch 1, **dadurch gekennzeichnet, daß** die das Loch der Gleitbuchse (8) bildende Führungsbohrung (14) als Langloch ausgebildet ist, das an den beiden, die Längsseiten bildenden Seitenwänden jeweils eine kreisbogenförmige Ausnehmung (15) aufweist, deren Radius etwa dem Radius des Lagerbolzens (10) entspricht.

20. Scheibenbremse nach Anspruch 19, **dadurch gekennzeichnet, daß** die Ausnehmungen (15) sich diametral gegenüberliegen.

21. Scheibenbremse nach Anspruch 19 oder 20, **dadurch gekennzeichnet, daß** die Stirnseiten der Führungsbohrung (14) kreisbogenförmig ausgebildet sind und bereichsweise konzentrisch zum Außenumfang der Gleitbuchse (8) verlaufen.

22. Scheibenbremse nach Anspruch 21, **dadurch gekennzeichnet, daß** die Breite der Führungsbohrung (14) geringer ist als der doppelte Radius (17) der Stirnseiten.

## Claims

1. Disc brake, in particular for a utility vehicle, with a caliper (2) incorporating a brake disc (1) and fixed to a brake backing plate (7) of the utility vehicle by means of two fixing elements so as to be axially slidable relative to the brake disc (1) , one fixing element being a fixed bearing (6) and the other being a floating bearing (5), **characterised in that** the floating bearing (5) consists of a guide bush (8) with partially differing wall thicknesses (S1, S2) and a bearing bolt (10) with a preferably round cross-section guided therein, which is radially displaceable relative to the guide bush (8).

2. Disc brake as claimed in the introductory part of claim 1, **characterised in that** the floating bearing (5) consists of a guide bush with a uniform wall thickness and a bearing bolt with an oval cross-section guided therein, which is radially displaceable relative to the guide bush (8).

3. Disc brake as claimed in claim 1, **characterised in that** the smallest internal cross-sectional dimension of the guide bush (8) approximately corresponds to the diameter of the bearing bolt (10).

4. Disc brake as claimed in claim 2, **characterised in that** the largest cross-sectional dimension of the bearing bolt approximately corresponds to the internal diameter of the guide bush.

5. Disc brake as claimed in claim 1, **characterised in that** the hole of the guide bush (8) is an oval bore (11).

6. Disc brake as claimed in claim 5, **characterised in that** the oval bore (11) is symmetrical in mirror image.

7. Disc brake as claimed in claim 5, **characterised in that** the oval bore (110 is slot-shaped.

8. Disc brake as claimed in one or more of claims 1-7, **characterised in that** the axis of the biggest longitudinal extension of the oval bore (11) of the guide bush (8) and the smallest cross-sectional extension of the bearing bolt with an oval cross-section lie on the same plane as the fixed bearing (6).

9. Disc brake as claimed in claim 1, **characterised in that** the guide bearing (8) is made from a section of a profiled strip (12, 13).

10. Disc brake as claimed in claim 9, **characterised in that** a section of the profiled strip (12, 13) is rolled so that the guide bush (8) has a cylindrical external surface.

11. Disc brake as claimed in claim 9, **characterised in that** the profiled strip (12) has two corrugated profiled areas extending in the longitudinal direction, the height (S1) of the corrugation peaks corresponding to the biggest wall thickness of the guide bush (8) and the height (S2) of the corrugation valleys adjoining the corrugation peaks corresponding to the thinnest wall thickness of the guide bush (8).

12. Disc brake as claimed in one of claims 9-11, **characterised in that** the width of the profiled strip approximately corresponds to the circumference of the guide bush (8).

13. Disc brake as claimed in claim 9, **characterised in that** the profiled strip (13) has a plurality of corrugated profiled areas extending parallel with and at a distance from one another.

14. Disc brake as claimed in claim 13, **characterised in that** the height (S1) of the corrugation peaks corresponds to the biggest wall thickness of the guide bush (8) and the height (S2) of the corrugation valleys corresponds to the smallest wall thickness.

15. Disc brake as claimed in claim 13, **characterised in that** the width (B) of the profiled strip (13) corresponds to the length of the guide bush (8).

16. Disc brake as claimed in claim 13, **characterised in that** every section used to form the guide bush (8) has two corrugation peaks and two corrugation valleys.

17. Disc brake as claimed in claim 1 or 2, **characterised in that** the guide bush (8) or the bearing bolt has a marking, which matches a marking of the caliper (2).

18. Disc brake as claimed in claim 9, **characterised in that** the profiled strip (12, 13) is made from steel, bronze, brass, plastic or a composite material provided with an anti-friction coating.

19. Disc brake as claimed in claim 1, **characterised in that** the guide bore (14) constituting the hole of the guide bush (8) is an elongate hole with a respective arcuate recess (15) in the two side walls forming the longitudinal sides, the radius of which approximately corresponds to the radius of the bearing bolt (10).

20. Disc brake as claimed in claim 19, **characterised in that** the recesses (15) lie diametrically opposite one another.

21. Disc brake as claimed in claim 19 or 20, **characterised in that** the end faces of the guide bore (14) are arcuate and extend concentrically with the external circumference of the guide bush (8) in certain regions.

22. Disc brake as claimed in claim 21, **characterised in that** the width of the guide bore (14) is smaller than double the radius (17) of the end faces.

## Revendications

1. Frein à disque, notamment pour un véhicule utilitaire, comportant un étrier (2) de frein qui embrasse un disque (1) de frein et qui est fixé à déplacement axial, par rapport au disque (1) de frein, sur un support (7) de frein du véhicule utilitaire au moyen de deux éléments de fixation, un élément de fixation étant réalisé sous forme de palier (6) fixe et l'autre sous forme de palier (5) libre, **caractérisé en ce que** le palier (5) libre est constitué d'une douille (8) de guidage ayant des épaisseurs (S1, S2) de paroi partiellement différentes et d'un axe (10) de palier guidé dans cette douille, mobile radialement par rapport à la douille (8) de guidage et ayant une section de préférence circulaire.

2. Frein à disque suivant le préambule de la revendication 1, **caractérisé en ce que** le palier (5) libre est constitué d'une douille de guidage d'épaisseur de paroi uniforme et d'un axe de palier guidé dans cette douille, mobile radialement par rapport à la douille (8) de guidage et ayant une section ovale.

3. Frein à disque suivant la revendication 1, **caractérisé en ce que** la plus petite dimension de section de passage de la douille (8) de guidage correspond approximativement au diamètre de l'axe (10) de palier.

4. Frein à disque suivant la revendication 2, **caractérisé en ce que** la plus grande dimension de section de l'axe de palier correspond approximativement au diamètre de passage de la douille de guidage.

5. Frein à disque suivant la revendication 1, **caractérisé en ce que** le perçage de la douille (8) de guidage est réalisé sous forme de perçage ovale (11).

6. Frein à disque suivant la revendication 5, **caractérisé en ce que** le perçage ovale (11) est symétrique comme en un miroir.

7. Frein à disque suivant la revendication 5, **caractérisé en ce que** le perçage ovale (11) est réalisé sous forme de trou oblong.

8. Frein à disque suivant une ou plusieurs des revendications 1 à 7, **caractérisé en ce que** l'axe de la plus grande longueur du perçage ovale (11) de la douille (8) de guidage ou la plus petite dimension de section de l'axe de palier de section ovale est dans un plan commun avec le palier (6) fixe.

9. Frein à disque suivant la revendication 1, **caractérisé en ce que** la douille (8) de guidage est formée d'un tronçon de bande (12, 13) profilée.

10. Frein à disque suivant la revendication 9, **caractérisé en ce qu'**un tronçon de bande (12, 13) profilée est roulé de telle sorte que la douille (8) de guidage possède une surface extérieure cylindrique.

11. Frein à disque suivant la revendication 9, **caractérisé en ce que** la bande (12) profilée possède deux profilages ondulés s'étendant en direction longitudinale, la hauteur (S1) des sommets d'ondulation correspondant à la plus grande épaisseur de paroi de la douille (8) de guidage et la hauteur (S2) des creux d'ondulation se raccordant aux sommets d'ondulation correspondant à la plus petite épaisseur de paroi de la douille (8) de guidage.

12. Frein à disque suivant l'une des revendications 9 à 11, **caractérisé en ce que** la largeur de la bande profilée correspond approximativement à la circonférence de la douille (8) de guidage.

13. Frein à disque suivant la revendication 9, **caractérisé en ce que** la bande (13) profilée comporte une pluralité de profilages ondulés s'étendant parallèlement et à distance entre eux.

14. Frein à disque suivant la revendication 13, **caractérisé en ce que** la hauteur (S1) des sommets d'ondulation correspond à la plus grande épaisseur de paroi de la douille (8) de guidage et la hauteur (S2) des creux d'ondulation à la plus petite épaisseur de paroi.

15. Frein à disque suivant la revendication 13, **caractérisé en ce que** la largeur (B) de la bande (13) profilée correspond à la longueur de la douille (8) de guidage.

16. Frein à disque suivant la revendication 13, **caractérisé en ce que** chaque tronçon destiné à former la douille (8) de guidage comporte deux sommets d'ondulation et deux creux d'ondulation.

17. Frein à disque suivant la revendication 1 ou 2, **caractérisé en ce que** la douille (8) de guidage ou l'axe de palier comporte un repère qui correspond à un repère de l'étrier (2) de frein.

18. Frein à disque suivant la revendication 9, **caractérisé en ce que** la bande (12, 13) profilée est réalisée en acier pourvu d'un revêtement de glissement, en bronze, en laiton, en matière plastique ou en un matériau composite.

19. Frein à disque suivant la revendication 1, **caractérisé en ce que** le perçage (14) de guidage formant le perçage de la douille (8) de guidage est réalisé sous la forme d'un trou oblong qui comporte, sur les deux parois latérales formant les côtés longitudinaux, un évidement (15) respectif en forme d'arc de cercle dont le rayon correspond approximativement au rayon de l'axe (10) de palier.

20. Frein à disque suivant la revendication 19, **caractérisé en ce que** les évidements (15) sont diamétralement opposés.

21. Frein à disque suivant la revendication 19 ou 20, **caractérisé en ce que** les côtés frontaux du perçage (14) de guidage sont réalisés en arc de cercle et s'étendent sectoriellement concentriquement au pourtour extérieur de la douille (8) de guidage.

22. Frein à disque suivant la revendication 21, **caractérisé en ce que** la largeur du perçage (14) de guidage est inférieure au double du rayon (17) des côtés frontaux.
